# EUROPEAN PATENT APPLICATION

(11) **EP 2 328 061 A2**
(43) Date of publication of application: **01.06.2011**
(21) Application number: 10012898.2
(22) Date of filing: 01.10.2010
(51) Int. Cl.: G06F 3/01, G06F 3/03, G06K 9/00

(54) **Input apparatus**

(30) Priority: 05.10.2009 JP 2009231110
(71) Applicant: Hitachi Consumer Electronics Co. Ltd., Tokyo 100-0004 (JP)
(72) Inventor: Matsubara, Takashi, Tokyo 100-8220 (JP); Kurosawa, Yuichi, Tokyo 100-8220 (JP)
(74) Representative: Strehl Schübel-Hopf & Partner

(57) **Abstract**

An input apparatus (100) including an input unit (102) to which a predetermined motion image signal is input, a motion detection unit (200) for detecting a motion from the motion image signal which is input to the input unit, a video signal processing unit (202) for outputting a predetermined video signal, and a control unit (201), wherein if a hand revolving motion of an operator is detected, the control unit (201) controls the video signal processing unit (202) to output a predetermined first video signal in synchronism with the hand revolving motion in order to inform the operator of a detection situation of the revolving motion and to output a predetermined second video signal in synchronism with the first video signal in order to inform the operator of a progress situation of a manipulation until a predetermined manipulation is definitely fixed.

## Description

### BACKGROUND OF THE INVENTION

The present invention relates to an input apparatus.

Personal computers and television sets which accept a manipulation of a user (operator) via a graphical user interface (hereafter referred to as GUI) and which give feedback of a manipulation result to the user at the same time are widespread.

In Patent Document 1, a portable terminal which exhibits manipulation guidance information to support a user's manipulation is disclosed. The user can execute a desired function by moving fingers vertically or horizontally in accordance with the guidance.

In Patent Document 2, an interface apparatus which conducts gesture image display to visually represent a recognition object of a gesture which becomes a user's manipulation is disclosed. The user can operate the apparatus while confirming the gesture image.

In Patent Document 3, a vehicle mounted device which displays an icon to display a gesture which becomes a user's manipulation and displays a manipulation which can be conducted is disclosed. The user can easily know a gesture to be made.

In Patent Document 4, a vehicle manipulation input apparatus which displays selection guide information to indicate a hand state on a steering wheel and a manipulation object device is disclosed. The user can select a desired manipulation device by moving a hand while referring to the guide.
Patent Document 1: JP-A-2007-213245
Patent Document 2: JP-A-2008-52590
Patent Document 3: JP-A-2001-216069
Patent Document 4: JP-A-2005-250785

### SUMMARY OF THE INVENTION

In any Patent Document, it is disclosed that motions and poses for a manipulation are displayed and the user executes a predetermined action concerning an apparatus in accordance with the motions and poses.

When the user attempts to make a predetermined motion or a predetermined pose for a manipulation, however, a different motion or a different pose made accidentally and unconsciously until the predetermined motion or the predetermined pose is reached might be recognized as that for a manipulation. In this way, there is a feat that an unintended operation concerning the apparatus might be executed.

For example, it is supposed that the user attempts to move a hand to the right in order to move displayed contents to the right. At this time, there is a fear that a motion of returning the hand moved to the right toward the left might be recognized as a manipulation for moving the contents to the left and the operation might be executed.

In other words, in any Patent Document, it is not considered to cause the user to intuitively understand whether each of user's motions is a recognized state when the user makes a gesture for a manipulation.

The present invention has been made in view of these circumstances, and an object thereof is to provide an input apparatus capable of being used conveniently which causes the user to know what a motion made by the user at the time of a manipulation is recognized as and which prevents an unintended manipulation from being executed.

In order to achieve the object, an input apparatus according to the present invention includes an input unit to which a motion of an operator is input as an image signal, an action detection unit for detecting a hand motion from the image signal which is input to the input unit, a display unit for displaying a graphical user interface, and a control unit for changing the graphical user interface displayed on the display unit in accordance with the hand motion detected by the action detection unit. The control unit moves a pointer so as to be in synchronism with the hand motion detected by the action detection unit and changes the graphical user interface so as to indicate an action quantity which corresponds to a quantity of the pointer movement.

For example, when the user attempts to operate an apparatus such as a television set with a gesture, the present invention makes it possible for the user to know what a gesture which is being made by the user is recognized as and make a gesture to bring about only an intended manipulation.

Other objects, features and advantages of the invention will become apparent from the following description of the embodiments of the invention taken in conjunction with the accompanying drawings.

### BRIEF DESCRIPTION OF THE DRAWINGS

Fig. 1 is a general view diagram showing an input apparatus according to a first embodiment;
Fig. 2 is a block diagram showing a configuration of the input apparatus according to the first embodiment;
Fig. 3 is a general view diagram showing a part of display of a GUI in the input apparatus according to the first embodiment;
Fig. 4 is a flow diagram for explaining operation of the input apparatus according to the first embodiment;
Fig. 5 is a general view diagram showing correspondence between user's manipulations and operations of an input apparatus in a second embodiment;
Fig. 6 is a general view diagram showing a part of display of a GUI in the input apparatus according to the second embodiment;
Fig. 7 is a general view diagram showing a part of display of the GUI in the input apparatus according to the second embodiment;
Fig. 8 is a general view diagram showing a part of display of the GUI in the input apparatus according to the second embodiment;
Fig. 9 is a general view diagram showing correspondence between user's manipulations and operations of an input apparatus in a third embodiment; and
Fig. 10 is a flow diagram for explaining operation of the input apparatus in the third embodiment.

### DESCRIPTION OF THE EMBODIMENTS

Hereafter, embodiments according to the present invention will be described.

### (First Embodiment)

An input apparatus in the present embodiment is an apparatus capable of detecting a motion of a user's hand from a moving picture obtained by picking up an image of the user and changing a display of a GUI according to the motion.

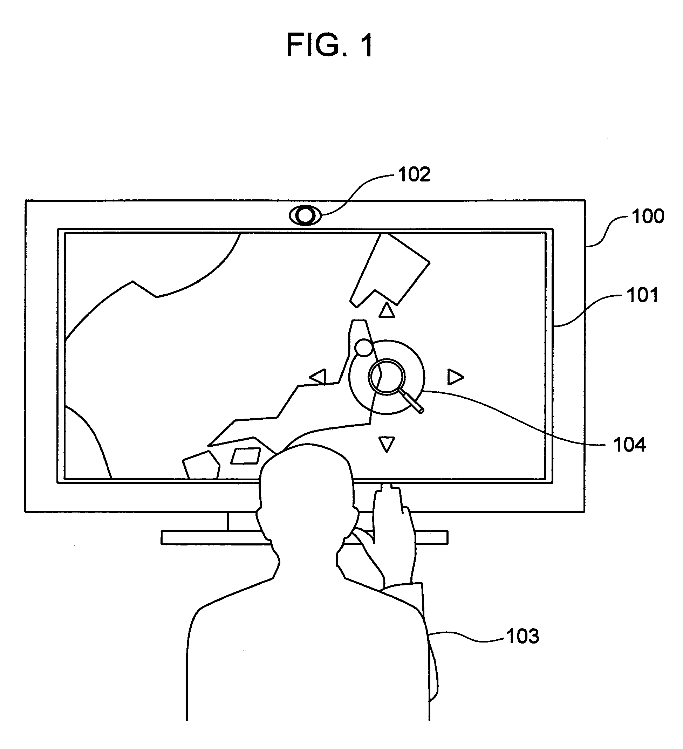

Fig. 1 shows a general view of an operation environment at the time when a user uses the input apparatus 100 with a display unit 101, an image pickup unit 102, a user 103 and a manipulation guide 104.

The display unit 101 is a display device of the input apparatus 100. The display unit 101 is formed of a display device such as, for example, a liquid crystal display or a plasma display. The display unit 101 includes a display panel, a panel control circuit, and a panel control driver. The display unit 101 displays video data, which is supplied from a video signal processing unit 202 described later, on the display panel. The image pickup unit 102 is a device for inputting a moving picture to the input apparatus 100, and it is, for example, a camera. The user 103 is a user who conducts a manipulation for the input apparatus 100. The pointer 104 is a GUI displayed on the display unit 101, and it is graphics for indicating a manipulation position and a manipulation state of the input apparatus 100 to the user 103.

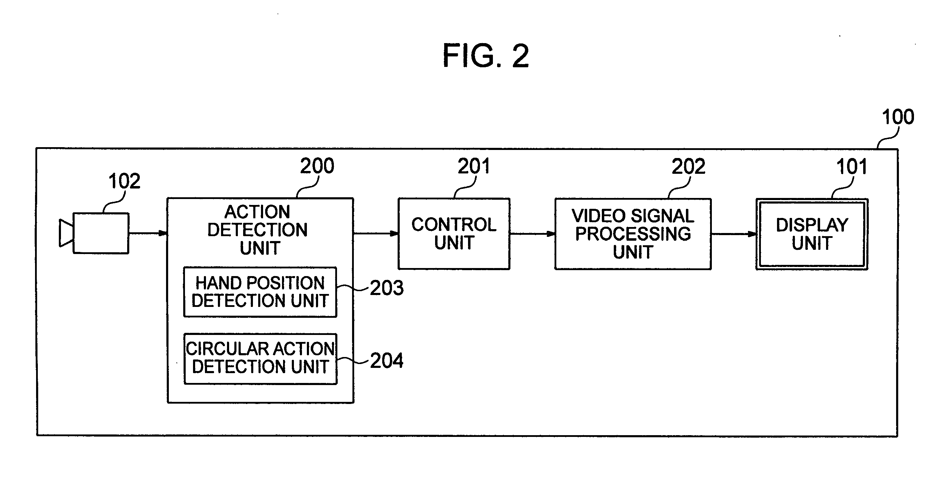

As shown in Fig. 2, the input apparatus includes, for example, the display unit 101, the image pickup unit 102, an action detection (motion detection) unit 200, a control unit 201, a video signal processing unit 202, a hand position detection unit 203, and a circular action detection unit 204.

The action detection (motion detection) unit 200 receives a moving picture signal from the image pickup unit 102, detects a person's hand position in the hand position detection unit 203, and detects a person's hand revolving motion in the circular action detection unit 204. In addition, according to the detected action, the action detection (motion detection) unit 200 outputs a predetermined command corresponding to the action. The control unit 201 includes, for example, a microprocessor, and controls operation of the video signal processing unit 202 in accordance with the command received from the action detection (motion detection) unit 200. The video signal processing unit 202 includes a processing device such as, for example, an ASIC, FPGA or MPU. The video signal processing unit 202 converts video data of the GUI to a form which can be processed by the display unit 101 and outputs resultant data under control of the control unit 201.

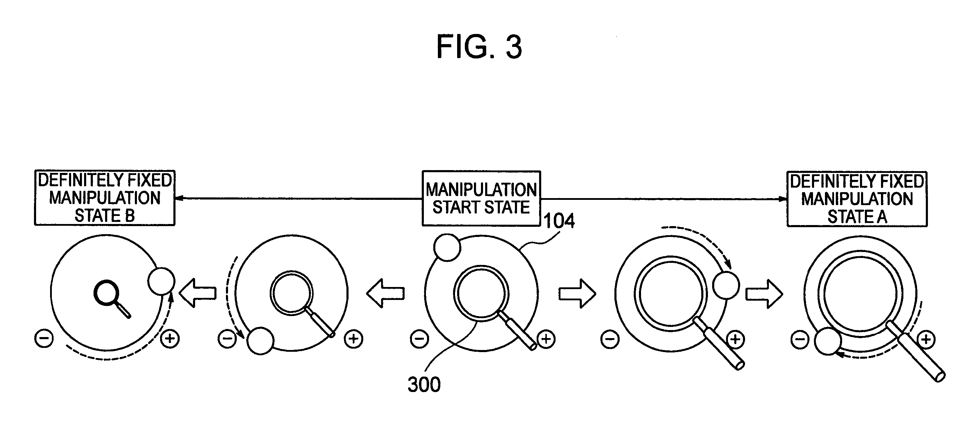

Fig. 3 shows a display change of the pointer 104 caused when the user 103 manipulates the input apparatus 100 according to the present invention. An icon 300 is graphics which indicate a state of a manipulation process obtained until a specified manipulation is definitely fixed when the user 103 manipulates the input apparatus 100. A picture of "manipulation start state" in Fig. 3 exhibits a state at the time when the user 103 starts manipulation of the input apparatus 100. The input apparatus 100 in the present embodiment is configured to recognize a hand revolving action of the user 103 and rotate the display of the pointer 104 in correspondence with the hand revolving action. Furthermore, the size of the icon 300 changes according to the rotation of the display of the pointer 104. The state of the manipulation process obtained until a specific manipulation is definitely fixed is indicated to the user 103 by the change of the size of the icon 300. When the user 103 has started the manipulation, therefore, the picture of the "manipulation start state" in Fig. 3 is exhibited. If the user 103 conducts a manipulation of revolving a hand clockwise in front of the input apparatus 100, then the icon 300 becomes greater while the pointer 104 is rotating as indicated by a change from the "manipulation start state" to a "definitely fixed manipulation state A" in FIG 3. On the other hand, if the user 103 conducts a manipulation of revolving a hand counterclockwise in front of the input apparatus 100, then the icon 300 becomes smaller while the pointer 104 is rotating as indicated by a change from the "manipulation start state" to a "definitely fixed manipulation state B" in FIG 3. In this way, the user 103 continues the hand revolving manipulation until pointer 104 and the icon 300 reach the state indicated by the "definitely fixed manipulation state A" or the "definitely fixed manipulation state B." As a result, a manipulation corresponding to the "definitely fixed manipulation state A" or the "definitely fixed manipulation state B" is executed.

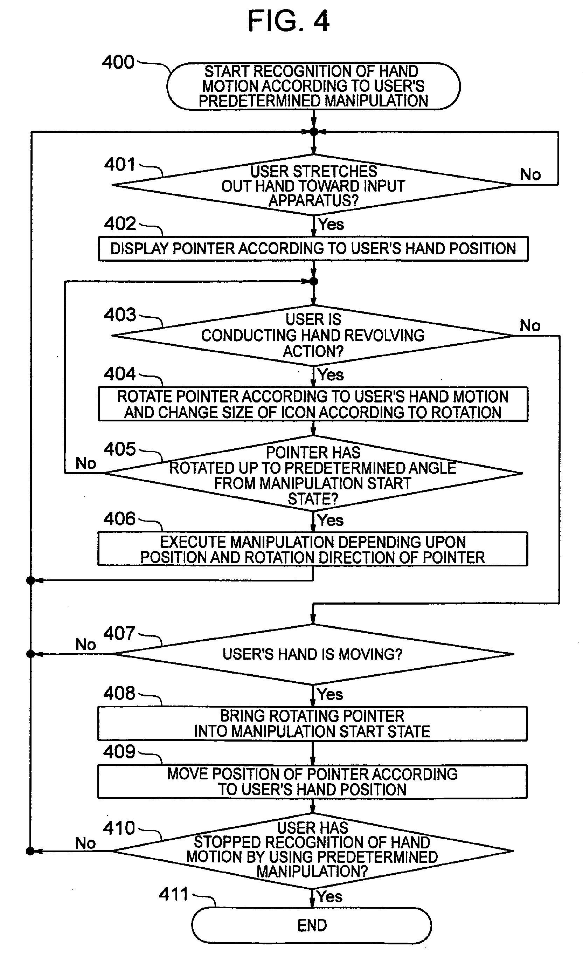

Operation of the input apparatus 100 will now be described with reference to Figs. 1 to 3 and a flow chart shown in Fig. 4.

The input apparatus 100 is an apparatus capable of detecting a hand action of the user 103 from a moving picture signal obtained by picking an image of the user 103 and changing the GUI display according to the action.

First, a flow of processing conducted until the input apparatus 100 detects the hand motion of the user 103 and displays the GUI according to the action will be described with reference to Fig. 2. It is supposed that the user 103 has started operation of the input apparatus 100 by, for example, depressing a power supply button which is not illustrated. The control unit 201 gives a command for displaying a predetermined video to the video signal processing unit 202 in response to the start of the operation. The video signal processing unit 202 outputs a video signal suitable for the input of the display unit 101 in response to the command. As a result, a video is displayed on the display unit 101.

Furthermore, the control unit 201 orders the image pickup unit 102 to start image pickup of a moving picture in response to the start of the operation. The image pickup unit 102 starts image pickup of the moving picture and outputs data of the moving picture picked up to the action detection (motion detection) unit 200. The action detection (motion detection) unit 200 detects the hand position of the user in the hand position detection unit 203 and detects the user's hand revolving motion in the circular action detection unit 204 from the received data of the moving picture by using a method such as a feature point extraction. In addition, the action detection (motion detection) unit 200 outputs a command which depends upon a detected result of the hand position and the hand revolving motion to the control unit 201. The control unit 201 orders the video signal processing unit 202 to display the GUI or change the display in response to the command. The video signal processing unit 202 changes an output video signal in response to the order. As a result, the GUI display on the display unit 101 is changed.

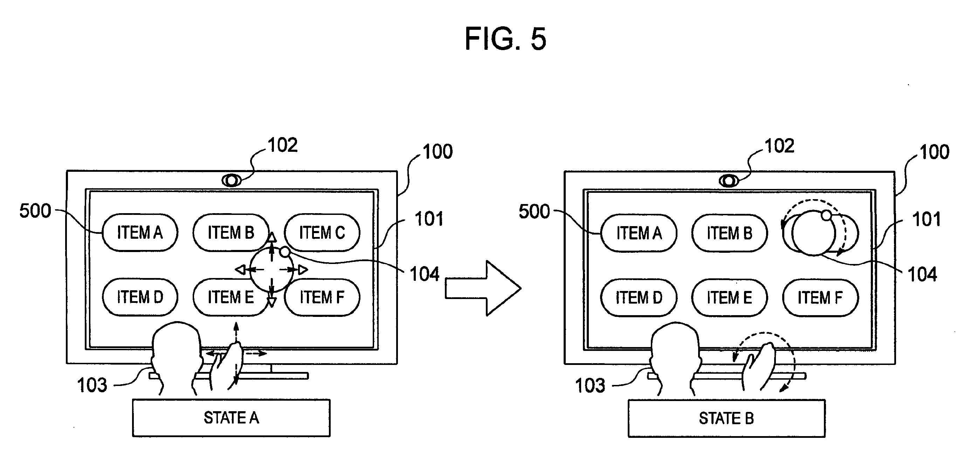

The display method of the pointer 104 and the icon 300 at the time when the user 103 manipulates the input apparatus 100 will be described with reference to Figs. 4 and 5.

First, the user 103 starts operation of the input apparatus 100 in accordance with a predetermined procedure, and the action detection unit 200 in the input apparatus 100 starts recognition of a person's hand motion (gesture) in accordance with the procedure described earlier (step 400).

Then, it is supposed that the user 103 stretches out a hand toward the input apparatus 100 (Yes at step 401). The input apparatus 100 recognizes a position of the hand of the user 103, and displays the pointer 104 on the display unit 101 according to the hand position (step 402). If the user 103 drops the hand at this time, the input apparatus 100 puts out the display of the pointer 104 (No at the step 401).

Then, it is supposed that the user 103 conducts a hand revolving action in front of the input apparatus 100 (Yes at step 403). The input apparatus 100 recognizes the hand revolving action, and rotates the pointer 104 and changes the size of the icon 300 according to the rotation of the pointer 104 as shown in Fig. 3 (step 404). In addition, the user 103 continues the hand revolving action. As a result, the pointer 104 rotates up to a predetermined angle (Yes at step 405). If the state indicated by the "definitely fixed manipulation state A" or the "definitely fixed manipulation state B" shown in Fig. 3 is reached, then the input apparatus 100 causes manipulation depending upon the position and rotation direction of the pointer 104 to be executed (step 406). If the pointer 104 has not rotated from the manipulation start state up to a predetermined angle (No at the step 405), the steps 403 to 405 are repeated. At this time, the pointer 104 rotates so as to be in synchronism with the hand revolving motion of the user 103. In addition, the size of the icon 300 changes according to the rotation of the pointer 104. As a result, the user 103 can intuitively grasp what state the manipulation is in at that moment, how far a manipulation should be continued to execute the manipulation, and to what extent the hand should be moved.

On the other hand, it is supposed at the step 403 that the user 103 does not conduct the hand revolving action (No at the step 403). The input apparatus 100 recognizes a hand motion of the user 103 in a state in which the hand is not revolved. For example, if the user's hand is moving in a direction having no relation to the revolving direction such as the vertical direction or the horizontal direction (Yes at the step 407), then the input apparatus 100 restores the display of the pointer 104 and the icon 300 to the "manipulation start state" shown in Fig. 3 (step 408). In addition, the input apparatus 100 moves the positions of the pointer 104 and the icon 300 in a display region of the display unit 101 according to the hand position of the user 103 (step 409). If then the user 103 makes a hand revolving motion and a manipulation is to be executed in the "definitely fixed manipulation state A" or the "definitely fixed manipulation state A," then a manipulation depending upon the positions of the pointer 104 and the icon 300 in the GUI is executed.

If the hand of the user 103 is not moving at the step 407, then the processing returns to the step 401 and subsequent processing is continued (No at the step 407). If the user orders recognition stopping of the hand motion by using a predetermined manipulation subsequent to the step 409 (step 410), then the input apparatus 100 finishes the recognition of the hand motion.

In this way, the input apparatus 100 recognizes the hand moving action of the user 103, changes the display of the pointer 104 and the icon 300 according to the action, and exhibits a manipulation state to the user 103. For example, when the user 103 manipulates a map displayed on the display unit 101, the user 103 can move the pointer 104 and the icon 300 and change the position of the displayed map by moving the hand. In addition, the user 103 can conduct a manipulation by making a hand revolving motion. For example, the user 103 can expand the map by revolving the hand clockwise and contract the map by revolving the hand counterclockwise. As a result, the user can confirm what state the manipulation is in at that moment, to what extent the hand should be moved, and how far a manipulation should be continued to execute a desired manipulation, in correspondence with each of user's motions. Therefore, the user can modify a motion to prevent an unintended manipulation from being conducted, and conduct GUI manipulations smoothly.

### (Second Embodiment)

A second embodiment will now be described. In the present embodiment, it is made possible in the input apparatus 100 to manipulate a GUI configured to select an item out of a plurality of selection items unlike the input apparatus 100 in the first embodiment. A manipulation method and a GUI display method in this case will be described. The present embodiment is the same as the first embodiment in the configuration and manipulation method of the input apparatus 100, and is different from the first embodiment in the GUI configuration and the display method of the pointer 104 in the GUI.

Hereafter, the present embodiment will be described with reference to the drawings. In the ensuing description, components which are equivalent to those in the foregoing embodiment are denoted by like characters and description of them will be omitted.

Fig. 5 shows correspondence between the hand motion of the user 103 and the motion of the GUI displayed on the display unit 101 at the time when the user 103 manipulates the input apparatus 100 in the present embodiment. Selection items 500 are the GUI displayed on the display unit 101. An arbitrary item is adapted to be selected out of a plurality of selection items arranged in the GUI. "State A" in Fig. 5 shows a state in which the position of the pointer 104 in the GUI changes according to movement of the hand of the user 103 and the user 103 can freely indicate an arbitrary position in the GUI by using the pointer 104. On the other hand, the user 103 conducts the hand revolving action in a position where the user 103 has moved the pointer 104 beforehand. "State B" in Fig. 5 shows a state in which the pointer 104 rotates in synchronism with the hand revolving motion.

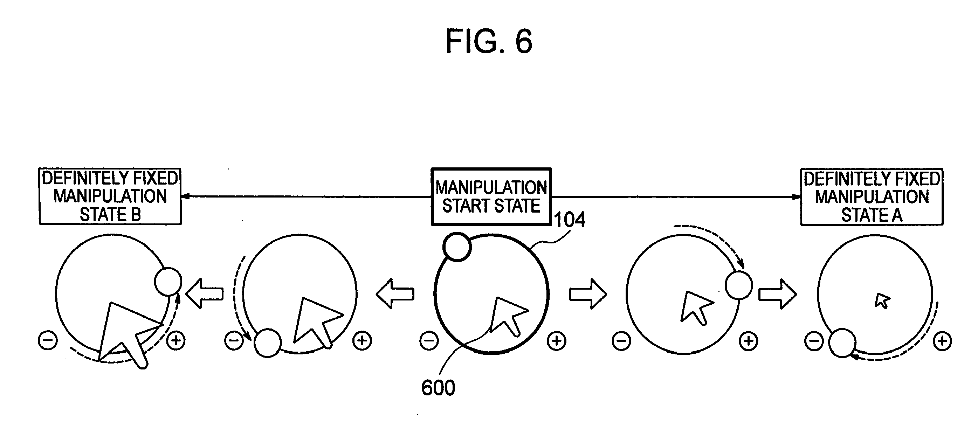

The display method of the pointer 104 in the input apparatus according to the present embodiment will now be described with reference to Figs. 6 to 8. The input apparatus according to the present embodiment can recognize the hand motion of the user 103 by using a method similar to that in the first embodiment.

Fig. 6 shows an example of a motion of an exterior view of a pointer 104 and an icon 600 at the time when the pointer 104 is displayed by using a method similar to that in the first embodiment. The icon 600 takes the shape of an arrow to allow the user 103 to indicate an arbitrary place in the GUI. If the user 103 stretches out a hand toward the input apparatus 100, then the pointer 104 and the icon 600 are displayed as shown in a picture of a "manipulation start state" in Fig. 6. Furthermore, also when the user 103 moves the pointer 104 as indicated by the "state A" in Fig. 5, the pointer 104 and the icon 600 assume the "manipulation start state" in Fig. 6.

If the user 103 conducts the hand revolving action as indicated by the "state B" in Fig. 5, then the pointer 104 rotates and the size of the icon 600 changes according to the rotation in the same way as the first embodiment. A change from the "manipulation start state" to the "definitely fixed manipulation state A" in Fig. 6 shows how the size of the icon 600 becomes smaller according to the rotation of the pointer 104 when the user revolves a hand clockwise. For example, when the user 103 revolves the hand clockwise and the "definitely fixed manipulation state A" in Fig. 6 is attained, a manipulation of selecting an item which is in the same position as that of the pointer 104 and the icon 600 from among the selection items 500 is executed. On the other hand, a change from the "manipulation start state" to the "definitely fixed manipulation state B" in Fig. 6 shows how the size of the icon 600 becomes greater according to the rotation of the pointer 104 when the user revolves the hand counterclockwise. For example, when the user 103 revolves the hand counterclockwise and the "definitely fixed manipulation state B" in Fig. 6 is attained, a manipulation of so-called "returning" or "canceling" such as returning to a display state of the last time which is not illustrated is executed on the GUI.

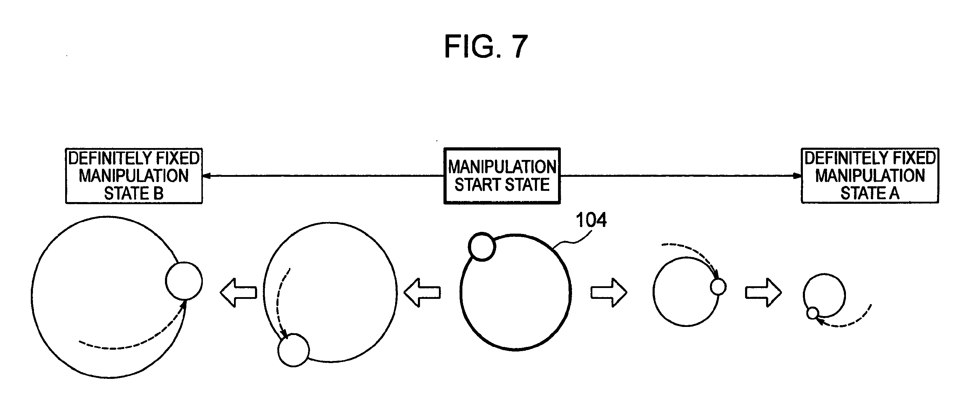

Fig. 7 shows an example of a motion of an exterior view of a pointer 104 which is different from that in Fig. 6 at the time when the pointer 104 is displayed by using a method similar to that in the first embodiment. If the user 103 stretches out a hand toward the input apparatus 100, then the pointer 104 is displayed as shown in a picture of a "manipulation start state" in Fig. 7. Furthermore, also when the user 103 moves the pointer 104 as indicated by the "state A" in Fig. 5, the pointer 104 assumes the "manipulation start state" in Fig. 7.

If the user 103 conducts the hand revolving action as indicated by the "state B" in Fig. 5, then the pointer 104 rotates in the same way as the first embodiment. At the same time, the size of the pointer 104 changes according to the rotation. A change from the "manipulation start state" to the "definitely fixed manipulation state A" in Fig. 7 shows how the size of the icon 600 becomes smaller according to the rotation of the pointer 104 when the user revolves a hand clockwise. For example, when the user 103 revolves the hand clockwise and the "definitely fixed manipulation state A" in Fig. 6 is attained, a manipulation of selecting an item which is in the same position as that of the pointer 104 and the icon 600 from among the selection items 500 is executed. On the other hand, a change from the "manipulation start state" to the "definitely fixed manipulation state B" in Fig. 7 shows how the size of the icon 600 becomes greater according to the rotation of the pointer 104 when the user revolves the hand counterclockwise. For example, when the user 103 revolves the hand counterclockwise and the "definitely fixed manipulation state B" in Fig. 7 is attained, a manipulation of so-called "returning" or "canceling" such as returning to a display state of the last time which is not illustrated is executed on the GUI.

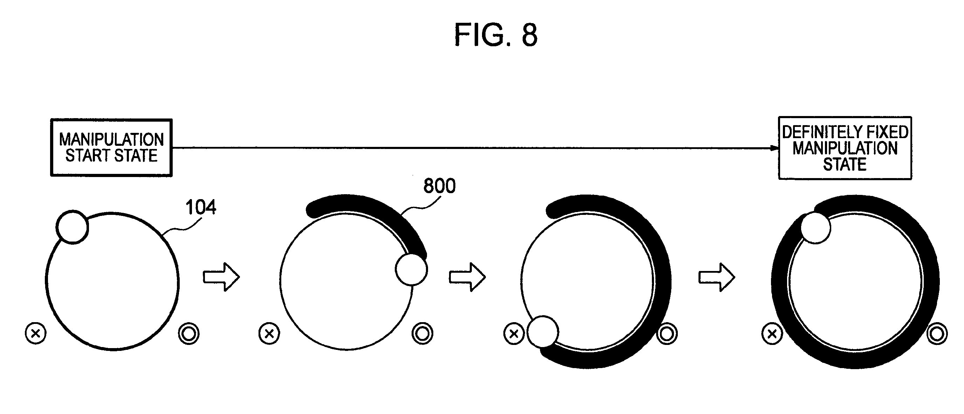

Fig. 8 shows an example of a motion of an exterior view of a pointer 104 and a line 800 which is different from that in Fig. 6 at the time when the pointer 104 is displayed by using a method similar to that in the first embodiment. The line 800 is graphics drawn on the GUI in synchronism with the motion of the pointer 104 in order for the user 103 to indicate an arbitrary place in the GUI. If the user 103 stretches out a hand toward the input apparatus 100, then the pointer 104 is displayed as shown in a picture of a "manipulation start state" in Fig. 8. Furthermore, also when the user 103 moves the pointer 104 as indicated by the "state A" in Fig. 5, the pointer 104 assumes the "manipulation start state" in Fig. 8.

If the user 103 conducts the hand revolving action as indicated by the "state B" in Fig. 5, then the pointer 104 rotates in the same way as the first embodiment and the line 800 is drawn around the pointer 104 according to the rotation. A change from the "manipulation start state" to the "definitely fixed manipulation state" in Fig. 8 shows how the line 800 is drawn according to the rotation of the pointer 104 when the user revolves a hand clockwise. For example, when the user 103 revolves the hand clockwise and the "definitely fixed manipulation state" in Fig. 8 is attained, a manipulation of selecting an item which is in the same position as that of the pointer 104 and a circle drawn with the line 800 is executed.

In this way, the input apparatus 100 recognizes the hand moving action of the user 103, changes the display of the pointer 104 and the icon or line according to the action, and exhibits a manipulation state to the user 103. As a result, the user can confirm what state the manipulation is in at that moment, to what extent the hand should be moved, and how far a manipulation should be continued to execute a desired manipulation, in correspondence with each of user's motions. Therefore, the user can modify a motion to prevent an unintended manipulation from being conducted, and conduct GUI manipulations smoothly.

### (Third Embodiment)

A third embodiment will now be described. In the present embodiment, a range of a GUI displayed on the display unit 101 in which a specific manipulation can be conducted is predetermined unlike the input apparatus 100 in the first embodiment and the input apparatus 100 in the second embodiment. And it is made possible in the input apparatus 100 to manipulate a GUI having a configuration in which the manipulation method or the pointer display method is changed over according to whether the location is inside the range in which the specific manipulation can be conducted. A manipulation method and a GUI display method in this case will be described. The present embodiment is the same as the first embodiment in the configuration of the input apparatus 100, and is different from the first embodiment in the GUI configuration and the display method of the pointer 104 in the GUI.

Hereafter, the present embodiment will be described with reference to the drawings. In the ensuing description, components which are equivalent to those in the foregoing embodiments are denoted by like characters and description of them will be omitted.

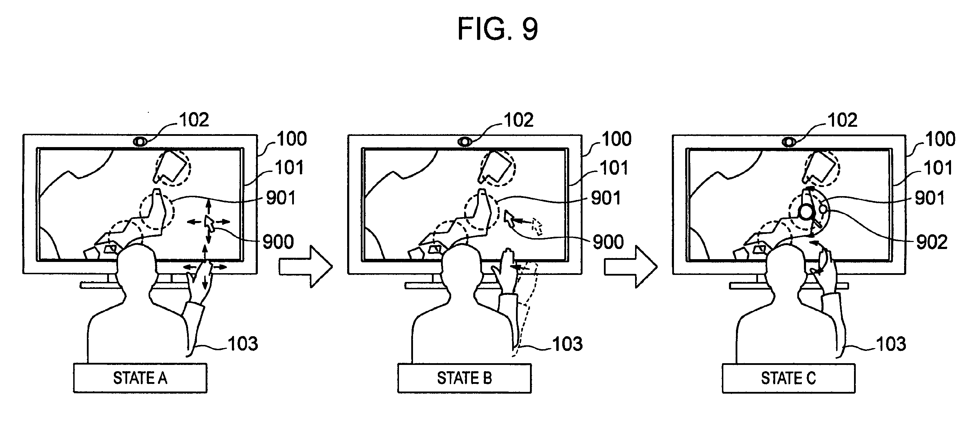

Fig. 9 shows correspondence between the hand motion of the user 103 and the motion of the GUI displayed on the display unit 101 at the time when the user 103 manipulates the input apparatus 100 in the present embodiment. A pointer 900 is a pointer capable of indicating a position in the GUI according to a hand motion of the user 103 by using a method similar to that in the first embodiment. A manipulation region 901 indicates a region on the GUI where a specific manipulation becomes effective if the pointer 900 is moved and located inside the manipulation region 901. For example, a GUI which makes it possible to display a map on the display unit 101 and conduct a manipulation for expanding the map in the specific region on the map is shown in Fig. 9. If the pointer 900 is located inside the manipulation region 101, therefore, the manipulation for expanding the map can be conducted. If the pointer 900 is located outside the manipulation region 101, the manipulation for expanding the map cannot be conducted. A circular manipulation pointer 902 is a pointer which is displayed in the GUI instead of the pointer 900 when the pointer 900 has entered inside the manipulation region 901.

A "state A" in Fig. 9 exhibits a state in which the position of the pointer 900 in the GUI changes according to the movement of a hand of the user 103 and the user 103 can freely indicate an arbitrary position in the GUI by using the pointer 900. A "state B" in Fig. 9 exhibits a state in which the user 103 moves the pointer 900 to a direction in the manipulation region 901. In addition, a "state C" in Fig. 9 exhibits a state in which the user 103 moves the pointer 900 to the inside of the manipulation region 901, the circular manipulation pointer 902 is displayed instead of the pointer 900, and the user 103 manipulates the circular manipulation pointer 902 by revolving the hand.

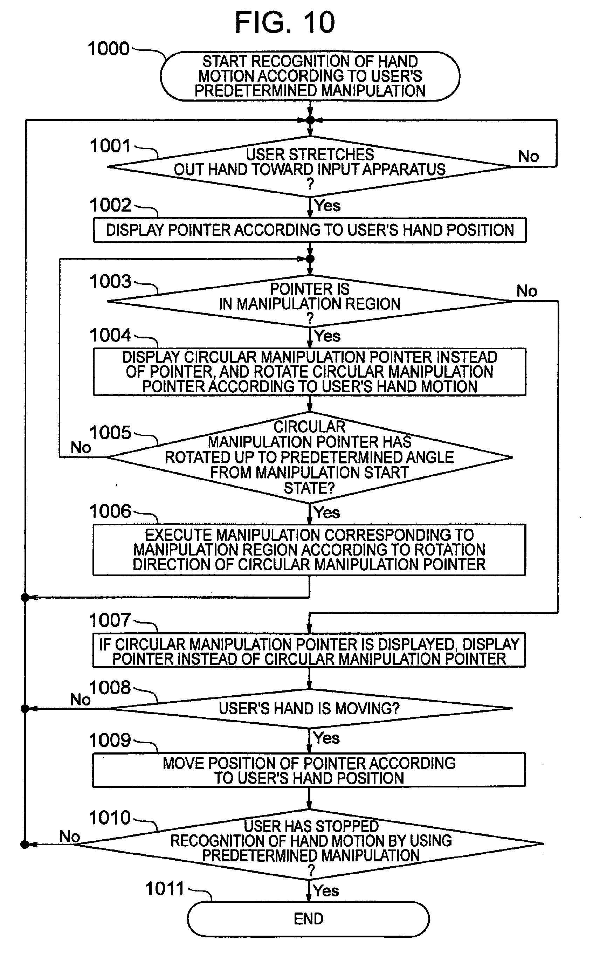

The display method of the pointer 900 and the circular manipulation pointer 902 at the time when the user 103 manipulates the input apparatus 100 will now be described with reference to Figs. 9 and 10.

First, the user 103 starts operation of the input apparatus 100 in accordance with a predetermined procedure, and the action detection unit 200 in the input apparatus 100 starts recognition of a person's hand motion (gesture) in accordance with the procedure described earlier (step 1000).

Then, it is supposed that the user 103 stretches out a hand toward the input apparatus 100 (Yes at step 401). The input apparatus 100 recognizes a position of the hand of the user 103, and displays the pointer 900 on the display unit 101 according to the hand position (step 1002). If the user 103 drops the hand at this time, the input apparatus 100 puts out the display of the pointer 900 (No at the step 1001).

Then, it is supposed that the position of the pointer 900 displayed on the display unit 101 is located inside the manipulation region 900 (Yes at step 1003). The input apparatus 100 displays the circular manipulation pointer 902 instead of the pointer 900. Furthermore, the input apparatus 100 rotates the circular manipulation pointer 902 in the same way as the first and second embodiments (step 1004). By the way, when displaying an icon relating to the motion of the circular manipulation pointer, the input apparatus 100 changes the size of the icon with the rotation of the circular manipulation pointer in the same way as the first and second embodiments.

In addition, if the user 103 continues the hand revolving action and consequently the circular manipulation pointer 902 rotates up to a predetermined angle (Yes at step 1005), then the input apparatus 100 causes manipulation depending upon the manipulation region 900 where the circular manipulation pointer 902 is located and the rotation direction of the circular manipulation pointer 902 to be executed (step 1006). If the circular manipulation pointer 902 does not rotate from the manipulation start state up to the predetermined angle (No at the step 1005), then the steps 1003 to 1005 are repeated. At this time, the circular manipulation pointer 902 rotates so as to be in synchronism with the hand revolving motion of the user 103.

On the other hand, it is now supposed that the pointer 900 is located outside the manipulation region 901 (No at the step 1003). If the circular manipulation pointer 902 is displayed in some manipulation region 901, then the input apparatus 100 displays the pointer 900 instead of the circular manipulation pointer 902 (step 1007). And if the user 103 moves the hand (Yes at step 1008), then the input apparatus 100 moves the position of the pointer 900 according to the hand position of the user 103 (step 1009). If the hand of the user 103 is not moving at the step 1008, then the processing returns to the step 1001 and subsequent processing is continued (No at the step 1008). If the user orders recognition stopping of the hand motion by using a predetermined manipulation subsequent to the step 1009 (step 1010), then the input apparatus 100 finishes the recognition of the hand motion.

In this way, the input apparatus 100 recognizes the hand moving action of the user 103, moves the pointer 900 according to the action, and displays the circular manipulation pointer 902 instead of the pointer 900 according to the position of the pointer 900 in the display unit 101. As a result, the input apparatus 100 exhibits a manipulation which is effective in a position indicated to the user 103. For example, when the user 103 manipulates a map displayer on the display unit 101, the user 103 moves the pointer 900 by moving the hand, confirms a place which can be expanded on the map on the basis of change from the pointer 900 to the circular manipulation pointer 902, and expands the map by making a hand revolving motion in a place where the circular manipulation pointer 902 is displayed. In this way, the user 103 can conduct the manipulations. As a result, the user can confirm what state the manipulation is in at that moment, how far a manipulation should be continued to execute a desired manipulation, and to what extent the hand should be moved, in correspondence with each of user's motions via the display of the pointer 900 and the circular manipulation pointer 902. Therefore, the user can modify a motion to prevent an unintended manipulation from being conducted, and conduct GUI manipulations smoothly.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An input apparatus (100) comprising:
an input unit (102) to which a motion of an operator (103) is input as an image signal;
an action detection unit (200) for detecting a hand motion from the image signal which is input to the input unit;
a display unit (101) for displaying a graphical user interface; and
a control unit (201) for changing the graphical user interface displayed on the display unit in accordance with the hand motion detected by the action detection unit,
wherein the control unit (201) moves a pointer (104) so as to be in synchronism with the hand motion detected by the action detection unit and changes the graphical user interface so as to indicate an action quantity which corresponds to a quantity of the pointer movement.

2. The input apparatus according to claim 1, wherein
the hand motion detected by the action detection unit (200) is a hand revolving motion, and
the movement of the pointer (104) in synchronism with the hand motion is a motion of rotating the pointer.

3. The input apparatus according to claim 1, wherein the action quantity is an expansion quantity or a contraction quantity of an icon (300).

4. The input apparatus according to claim 1, wherein the action quantity is a locus of a movement of the pointer (104).

5. The input apparatus according to claim 1, wherein the control unit (201) changes the graphical user interface to cause a predetermined manipulation to be executed when the action quantity has reached a predetermined quantity.

6. The input apparatus according to claim 5, wherein the execution of the predetermined manipulation is an expanded display or a contracted display in a position where the pointer is indicated.

7. The input apparatus according to claim 5, wherein the execution of the predetermined manipulation is a selection of an arbitrary selection item on which the pointer is displayed, from among a plurality of selection items (500).

8. The input apparatus according to claim 1, wherein
the control unit (201) moves a pointer (900) so as to be in synchronism with the hand motion detected by the action detection unit (200), and
if the pointer is within a predetermined display region (900), the control unit (201) changes the graphical user interface so as to indicate an action quantity which corresponds to a quantity of the pointer movement.
